# EUROPEAN PATENT SPECIFICATION

(11) **EP 3 396 935 B1**
(45) Date of publication and mention of the grant of the patent: **14.08.2019**
(21) Application number: 17168060.6
(22) Date of filing: 25.04.2017
(51) Int. Cl.: H04M 15/00, H04M 15/28, H04W 4/24

(54) **TECHNIQUES FOR PROVIDING TARIFF INFORMATION IN REAL-TIME**
VERFAHREN ZUR BEREITSTELLUNG VON TARIFINFORMATIONEN IN ECHTZEIT
TECHNIQUES PERMETTANT DE FOURNIR DES INFORMATIONS TARIFAIRES EN TEMPS RÉEL

(43) Date of publication of application: 31.10.2018
(73) Proprietor: Deutsche Telekom AG, 53113 Bonn (DE)
(72) Inventor: Stepanek, Nicolas Walter, 64385 Reichelsheim (DE); Spanknebel, Frank R., 64521 Groß-Gerau (DE)
(74) Representative: Raible Deissler Lehmann Patentanwälte PartG mbB

(56) References cited:
- EP-A1- 2 541 885
- WO-A1-2010/000826

## Description

### TECHNICAL FIELD

The present disclosure relates to techniques for providing tariff information in real-time. The disclosure relates to a communication server and a method for providing tariff information for a first communication device for calling a second communication device. The disclosure further relates to a first communication device providing tariff information for calling at least one second communication device. In particular, the disclosure relates to a real-time tariff information system for telephony numbers.

### BACKGROUND

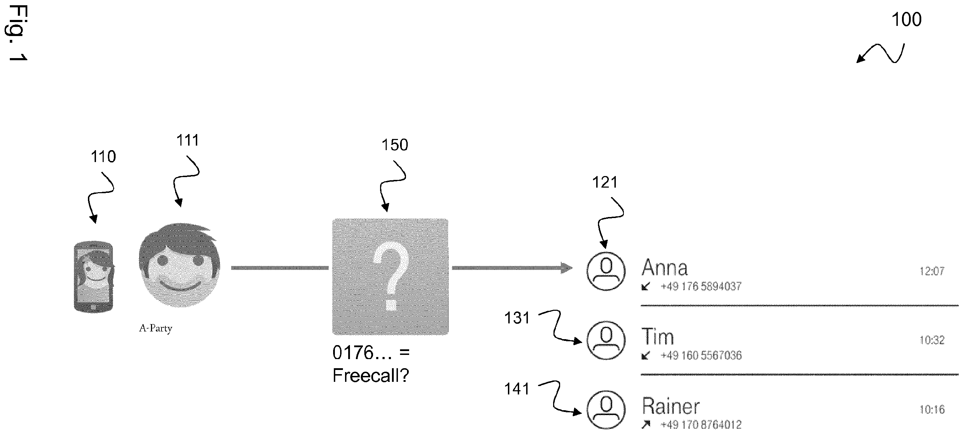

Fig. 1 shows a schematic diagram illustrating a communication system 100 where a first user (A-Party) 111 has a first communication device 110, e.g. a smartphone for calling any second user (B-Party), e.g. Anna 121, Tim 131 or Rainer 141 over the communication system 100. Before calling any second user, the first user 111 wants to know 150 which numbers are included in the flatrate of his tariff plan for making the decision to call back. Furthermore, the first user 111 wants to know which numbers are included in the flatrate of his tariff plan for knowing how long he can speak. In a current work-around for end-users, the end-user has to know details about his current tariff plan. User A-Party 111 has to ask B-Party, e.g. Anna 121, about the mobile network she is registered in and remember this for all his contacts. If the B-Party, e.g. Anna 121, is porting her number from one carrier to another, the A-Party 111 does not know this. A number which was called for free in the past is generating cost now.

EP 2 541 885 A1 describes an example for querying price of a call, see Figure 6. The pricing application 615 delivers a pricing query containing a contact information in the form of telephone number. The backend application 620 contacts the number database 630 in the home location register and makes a query for said number.

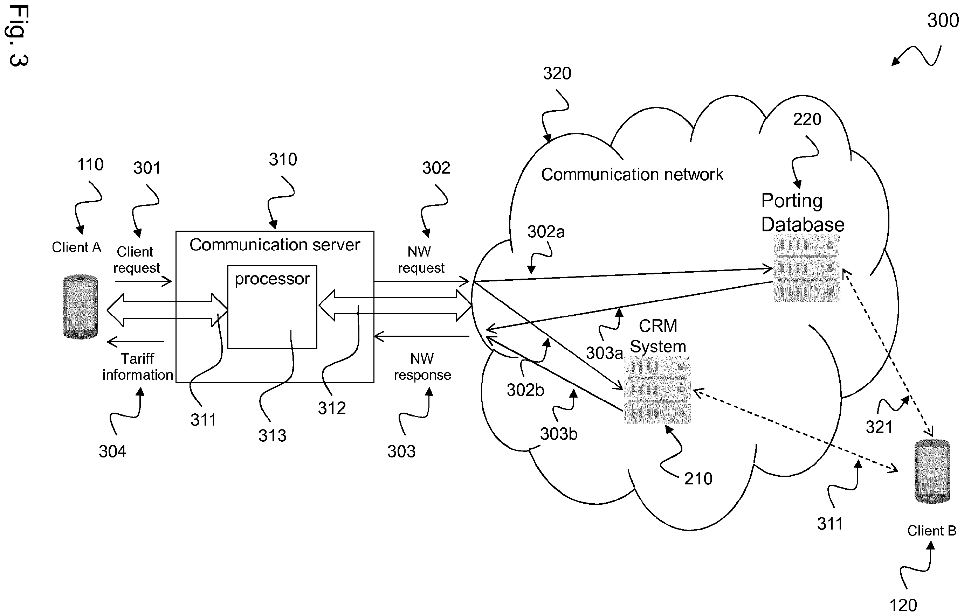

WO 2010/000826 A1 describes pricing rules that are stored in databases of a memory 215 of an Advertisement Management System (AMS) 20, see Figure 3. These pricing rules may depend on various modes of communication, e.g. voice, text, videophone, e-mail, etc. in the network and out of the network.

### SUMMARY

It is the object of the invention to provide a concept for providing tariff information to the A-Party before call establishment. In particular it is an object of the invention to provide information to the A-Party in which network the B-Party is located and by which call type the B-Party can be reached.

This object is achieved by the features of the independent claims. Further implementation forms are apparent from the dependent claims, the description and the figures.

A basic concept of the invention addresses a "Real time tariff information system" with which the A-Party can see in real time if calling a number is for free and included into his tariff. Displaying the required information is possible by asking the backend. Billing, CRM (Customer Relation Management) and the porting database can deliver the information needed. By displaying this information the communication, in particular the FMC (Fixed Mobile Convergence) portfolio becomes more visible for all customers, their life time is increased and there are more calls and minutes in total. The visual interface can be used to upsell customers into higher tariff bundles, too.

In order to describe the invention in detail, the following terms, abbreviations and notations will be used:
- CRM:: Customer Relation Management
- 5G:: fifth generation mobile network
- LTE:: Long Term Evolution
- BS:: Base Station, eNodeB
- RF:: radio frequency

According to a first aspect, the invention relates to a communication server according to claim 1.

Such a communication server can provide the tariff information to the first communication device in real-time. Hence, the user of the first communication device knows if a call to the second communication device is a freecall or included in his tariff. The A-Party further knows from the tariff information if the B-Party is associated with the same network operator than the A-Party or if the B-Party has changed its network operator. The tariff information can further be used to inform the A-Party in which network the B-Party is located and by which call type, e.g. local call, mobile call, call to a foreign network, call to another country, the B-Party can be reached.

In an implementation form of the communication server, the processor is configured to transmit the tariff information to the first communication device before a communication establishment is initiated between the first communication device and the second communication device.

This provides the advantage that the A-Party knows the technical details of the call before initiating the call. Hence, the A-Party can decide whether to call the B-Party based on this received tariff information.

In an implementation form of the communication server, the tariff information indicates if calling the second communication device is a freecall for the first communication device or included in a flatrate of a tariff plan for the first communication device.

This provides the advantage that the A-Party knows the tariff model of its network operator before initiating a call. This knowledge simplifies the whole communication process because the tariff model is no more a "hidden information" but can be displayed at the terminal of the A-Party.

In an implementation form of the communication server, the network request comprises a first network request directed to a porting database and a second network request directed to a customer relationship management (CRM) system.

This provides the advantage that the first communication device of the A-Party does not have to know which entities of the communication network to ask for the required tariff information. The logic for deciding this can be implemented at the processor of the communication server. Such a concept facilitates the design of the first communication device of the A-Party resulting in higher power efficiency and efficient utilization of battery.

In an implementation form of the communication server, the first network request is configured to request registry information of the second communication device; and the second network request is configured to request the tariff information for the first communication device based on the registry information of the second communication device.

This provides the advantage that the tariff information can be derived based on a specific network operator in which network the B-Party is registered. The communication server can thus efficiently discriminate between different networks and different tariff models of various network operators and provide this information to the A-Party.

In an implementation form of the communication server, the network response comprises a first network response to the first network request, the first network response comprising a service provider ID associated with the ID of the second communication device.

This provides the advantage that the communication server receives the service provider ID in which network the second communication device is registered and can use this information to obtain the tariff information for calling to the network corresponding to this service provider ID.

In an implementation form of the communication server, the first network response further comprises at least one of the following information elements: a service provider type, in particular wireless or wireline, a location routing number (LRN), an SS7 destination point code, a service type, an alternative service provider ID, a billing ID, an end user location and type.

This provides the advantage that the communication server can obtain different parameters which are necessary to initiate a connection to the B-Party. Hence, the communication server can use these parameters to obtain tariff information for calling the second communication device.

In an implementation form of the communication server, the second network request comprises an ID of the first communication device and the service provider ID associated with the ID of the second communication device.

This provides the advantage that the communication server can easily check if the network corresponding to the service provider ID is included in the tariff of the A-Party and transmit that information to the first communication device of the A-Party.

In an implementation form of the communication server, the ID of the first communication device is stored in a lookup table of the communication server and/or comprised in the client request.

This provides the advantage that the communication server can efficiently obtain the identity of the first communication device and use this information to check its tariff. When the ID is stored in a lookup table, message traffic can be reduced; when the ID is obtained from the client request, storage on the communication server can be reduced. The implementation can be flexibly adapted to the corresponding scenario.

In an implementation form of the communication server, the ID of the first communication device and/or the ID of the second communication device are one of the following: a telephone number, an International Mobile Subscriber Identity (IMSI), a mobile subscriber ISDN (MSISDN) number, a Session Initiation Protocol Unitform Resource Identifier (SIP URI), a MAC address or an IP address.

This provides the advantage that the communication server can be flexible applied to a variety of different communication scenarios, e.g. telephone communication, mobile communication, fixed-mobile convergence (FMC), IP communication, SIP communication, IMS communication, etc.

In an implementation form of the communication server, the network response comprises a second network response to the second network request, the second network response comprising the tariff information.

This provides the advantage that different network nodes can be used to obtain responses for the network request for tariff information, for example a porting database, a CRM system, a billing system, etc. The information can be distributed in the network and different network responses can provide the requested information by asking the different network nodes.

According to a second aspect, the invention relates to a communication system according to claim 8.

The first communication device can provide the tariff information via the communication server from the communication network in real-time. Hence, the user of the first communication device, i.e. the A-Party, knows if a call to the second communication device is a freecall or included in his tariff. The A-Party further knows from the tariff information if the B-Party is associated with the same network operator than the A-Party or if the B-Party has changed its network operator. The tariff information can further be used to inform the A-Party in which network the B-Party is located and by which call type, e.g. local call, mobile call, call to a foreign network, call to another country, the B-Party can be reached.

In an implementation form of the first communication device, the processor is configured to display the tariff information on the display before initiating a communication establishment with the at least one second communication device.

This provides the advantage that the A-Party knows the technical details of the call before initiating the call. Hence, the A-Party can decide whether to call the B-Party based on this received tariff information which is displayed on its display.

In an implementation form, the first communication device comprises: a memory storing a list of contact persons, wherein each contact person from the list is associated with a respective ID of the second communication device, and the processor is configured to display the tariff information together with a corresponding contact person entry from the list.

This provides the advantage that the tariff information is easy to understand for the A-Party. The A-Party has an overview over all possible B-Parties and can save this information for future calls.

According to a third aspect, the invention relates to a method for providing tariff information according to claim 11.

By using such a method the tariff information can be provided to the first communication device in real-time. Hence, the user of the first communication device, i.e. the A-Party, knows if a call to the second communication device is a freecall or included in his tariff. The A-Party further knows from the tariff information if the B-Party is associated with the same network operator than the A-Party or if the B-Party has changed its network operator. The tariff information can further be used to inform the A-Party in which network the B-Party is located and by which call type, e.g. local call, mobile call, call to a foreign network, call to another country, the B-Party can be reached.

The same advantages as described above for the method also apply for the communication system. I.e., the A-Party, knows if a call to the second communication device is a freecall or included in his tariff. The A-Party further knows network details of the B-Party, in particular if the B-Party is associated with the same network operator than the A-Party or if the B-Party has changed its network operator. The tariff information can further be used to inform the A-Party in which network the B-Party is located and by which call type, e.g. local call, mobile call, call to a foreign network, call to another country, the B-Party can be reached.

### BRIEF DESCRIPTION OF THE DRAWINGS

Further embodiments of the invention will be described with respect to the following figures, in which:
Fig. 1 shows a schematic diagram illustrating a communication system 100.
Fig. 2 shows a schematic diagram illustrating a communication system 200 with real-time tariff information according to the disclosure.
Fig. 3 shows a schematic diagram illustrating message flows in a communication system 300 with real-time tariff information according to an implementation form.
Fig. 4 shows a schematic diagram illustrating a communication device 110 providing real-time tariff information according to an implementation form.
Fig. 5 shows a schematic diagram illustrating a method 500 for providing tariff information of a first communication device for calling a second communication device according to an implementation form.

### DETAILED DESCRIPTION OF EMBODIMENTS

In the following detailed description, reference is made to the accompanying drawings, which form a part thereof, and in which is shown by way of illustration specific aspects in which the disclosure may be practiced. It is understood that other aspects may be utilized and structural or logical changes may be made without departing from the scope of the present disclosure. The following detailed description, therefore, is not to be taken in a limiting sense, and the scope of the present disclosure is defined by the appended claims.

It is understood that comments made in connection with a described method may also hold true for a corresponding device or system configured to perform the method and vice versa. For example, if a specific method step is described, a corresponding device may include a unit to perform the described method step, even if such unit is not explicitly described or illustrated in the figures. Further, it is understood that the features of the various exemplary aspects described herein may be combined with each other, unless specifically noted otherwise.

The communication systems as described hereinafter may include a plurality of different network entities or network nodes. A network entity or a network node may be a computer host or a computer server. A network entity or network node may be a hardware unit, e.g. a computer server, a network device, a PC, a tablet, a smartphone, a router, a gateway or a whole computer network. A network entity or a network node may be a software unit, e.g. an application program or software module on a PC, tablet, smartphone or any other hardware device.

The communication systems, the communication server and the communication devices as described hereinafter may be implemented by various technologies, in particular utilizing communication networks based on mobile communication standards such as LTE, in particular LTE-A and/or OFDM and successor standards such as 5G or based on IEEE 802.11 networks such as WiFi. The components and network nodes of such systems may be implemented as electronic devices or electronic network entities. The described devices and network entities may include integrated circuits and/or passives and may be manufactured according to various technologies. For example, the circuits may be designed as logic integrated circuits, analog integrated circuits, mixed signal integrated circuits, optical circuits, memory circuits and/or integrated passives.

In the following, porting databases and customer relationship management (CRM) systems are described. A porting database stores porting records for call numbers. When a call is made to the ported telephone number, the initiating service provider switch launches a query to its porting database, e.g. an LNP (local number portability) call routing database, to determine whether the telephone number has been ported. If it has, the database response provides the switch with the information, e.g. LRN (location routing number), needed to properly route the call. If the number is not ported, the database response indicates that the call should be routed based on the telephone number. When multiple switches are involved in the call path, the next to last carrier has the responsibility to make the LNP database query if one has not already been made. Each porting record, referred to as a Subscription Version, may contain various pieces of information about the telephone number including: The telephone number; The current assigned service provider ID (SPID); The service provider type (such as wireless or wireline); The LRN; SS7 Destination Point Codes (LIDB, CNAM, CLASS, etc.); Service Type (such as class 2 VoIP or pre-paid wireless); Alternative SPID (to identify a reseller); Billing ID; End user location and type.

The main components of CRM are building and managing customer relationships through marketing, observing relationships as they mature through distinct phases, managing these relationships at each stage and recognizing that the distribution of value of a relationship to the firm is not homogenous. When building and managing customer relationships through marketing, firms might benefit from using a variety of tools to help organizational design, incentive schemes, customer structures, and more to optimize the reach of its marketing campaigns. Through the acknowledgement of the distinct phases of CRM, businesses will be able to benefit from seeing the interaction of multiple relationships as connected transactions. The final factor of CRM highlights the importance of CRM through accounting for the profitability of customer relationships. Through studying the particular spending habits of customers, a firm may be able to dedicate different resources and amounts of attention to different types of consumers. A CRM system may store customer relations with network operators providing service to their telephone networks and communication networks.

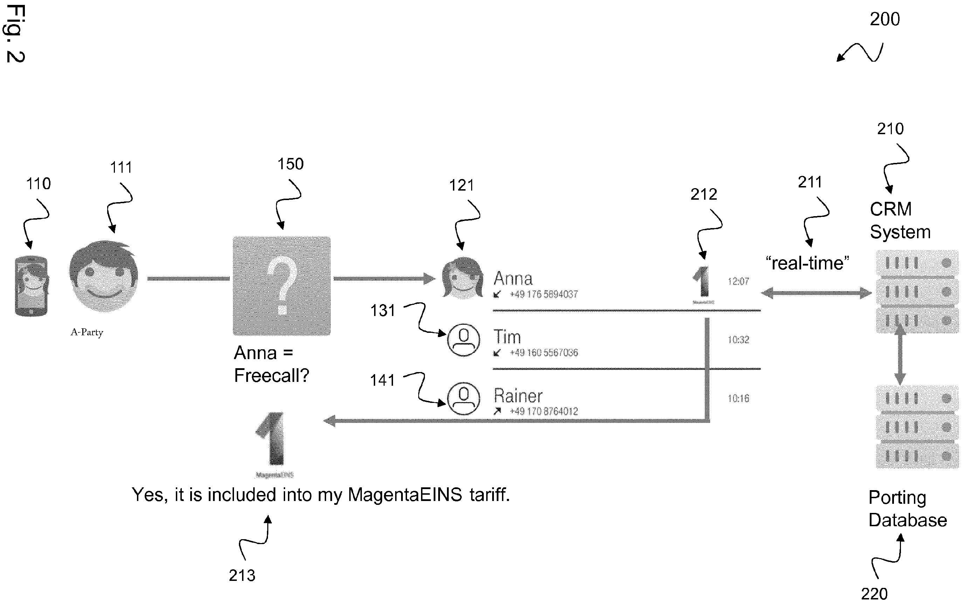

Fig. 2 shows a schematic diagram illustrating a communication system 200 with real-time tariff information according to the disclosure. The A-Party 111 uses a first communication device 110, e.g. a smartphone or any other telephone, to initiate a communication with a B-Party, e.g. Anna 121, Tim 131 or Rainer 141. The A-Party 111 knows the telephone numbers of the respective B-Parties, e.g. from their call log or their address book stored in a memory of the first communication device 110. For example Anna 121 has the telephone number +49 176 5894037, Tim has the telephone number +49 160 5567036 and Rainer has the telephone number +49 170 8764012. These telephone numbers show that all B-Parties are registered with different telephone operators. The A-Party 111 does not know if their tariff 212 allows a freecall 150 to any of these operators.

The "Real time tariff information system" is a communication system 200 as shown in Fig. 2 by which the A-Party 111 can see in real time if calling a number, e.g. number +49 176 5894037 of Anna 121, is for free and included into his tariff 213. Displaying the required information can be achieved by asking the backend. For example Billing, CRM (Customer Relation Management) System 210 and the porting database 220 can deliver the information 213 needed in real-time 211. The porting data base 220 may store a mapping of subscribers to operator networks, e.g. telephone number +49 176 5894037 of Anna 121 is mapped to a first operator network which is characterized by the digits "176", telephone number +49 160 5567036 of Tim 131 is mapped to a second operator network which is characterized by the digits "160" and telephone number +49 170 8764012 of Rainer 141 is mapped to a third operator network which is characterized by the digits "170". CRM system 210 may check if calls from A-Party 111 to first operator network "176" are included in the tariff 213 of A-Party 111, if calls from A-Party 111 to second operator network "160" are included in the tariff 213 of A-Party 111 and if calls from A-Party 111 to third operator network "170" are included in the tariff 213 of A-Party 111. The billing system (not depicted in Fig. 2) may check the tariff for calling to an operator network that is not included in the tariff 212 of A-Party 111.

By displaying this information the communication, in particular the FMC (Fixed Mobile Convergence) portfolio becomes more visible for all customers, their life time is increased and there are more calls and minutes in total. The visual interface can be used to upsell customers into higher tariff bundles, too.

Fig. 3 shows a schematic diagram illustrating message flows in a communication system 300 with real-time tariff information according to an implementation form. The communication system 300 includes a communication network 320 and a communication server 310 coupled between a first communication device 110 and a second communication device 120. The first communication device 110 is coupled by the communication server 310 to the communication network 320. The communication server 310 may be part of the communication network 320 or may be a stand-alone server. The communication server 310 initiates the message flows as described below between the first communication device 110 and the communication network 320.

The communication server 310 provides tariff information 304 for the first communication device 110 for calling a second communication device 120. The first communication device may correspond to the first communication device 110 described above with respect to Figures 1 and 2. The second communication device 120 may be a communication device of Anna 121, Tim 131 or Rainer 141 as described above with respect to Figures 1 and 2.

The communication server 310 includes a client interface 311 with the first communication device 110, a network interface 312 with the communication network 320 and a processor 313. The processor 313 is configured to receive a client request 301 for tariff information 304 via the client interface 311, wherein the client request 301 comprises an identity (ID) of the second communication device 120. The processor 313 is further configured to transmit a network request 302 for providing the tariff information 304 via the network interface 312 to the communication network 320, the network request 302 comprising the ID of the second communication device 120. The processor 313 is further configured to receive a network response 303 to the network request 302 via the network interface 312, the network response 303 comprising the tariff information 304, wherein the tariff information 304 indicates a tariff for the first communication device 110 for calling the second communication device 120. The processor 313 is further configured to transmit the tariff information 304 via the client interface 311 to the first communication device 110.

The processor 313 may be configured to transmit the tariff information 304 to the first communication device 110 before a communication establishment is initiated between the first communication device 110 and the second communication device 120. Then, the A-Party 111 can check if the communication to the second communication device 120 is free before initiating the communication.

The tariff information 304 may indicate if calling the second communication device 120 is a freecall 150, e.g. as shown in Figures 1 and 2, for the first communication device 110 or included in a flatrate of a tariff plan 213 for the first communication device 110, e.g. included in a MagentaEINS tariff as shown above in Figure 2.

The network request 302 may include a first network request 302a directed to a porting database 220 and a second network request 302b directed to a customer relationship management (CRM) system 210, e.g. a porting database 220 and CRM system 210 as described above with respect to Fig. 2.

The first network request 302a may be is configured to request registry information of the second communication device 120. The second network request 302b may be configured to request the tariff information 304 for the first communication device 110 based on the registry information of the second communication device 120.

The network response 303 may include a first network response 303a to the first network request 302a, wherein the first network response 303a includes a service provider ID associated with the ID of the second communication device 120. For example if the second communication device 120 is the communication device of Anna 121, the service provider ID may be according to the digits "176" to indicate a specific first service provider. If the second communication device 120 is the communication device of Tim 131, the service provider ID may be according to the digits "160" to indicate a specific second service provider. If the second communication device 120 is the communication device of Rainer 141, the service provider ID may be according to the digits "170" to indicate a specific third service provider.

The first network response 303a may further comprise at least one of the following information elements: a service provider type, in particular wireless or wireline, a location routing number (LRN), an SS7 destination point code, a service type, an alternative service provider ID, a billing ID, an end user location and type.

The second network request 302b may include an ID of the first communication device 110 and the service provider ID associated with the ID of the second communication device 120. The ID of the first communication device 110 may be stored in a lookup table of the communication server 310. The ID of the first communication device 110 may also be included in the client request 301.

The ID of the first communication device 110 and/or the ID of the second communication device 120 may be one of the following items: a telephone number, an International Mobile Subscriber Identity (IMSI), a mobile subscriber ISDN (MSISDN) number, a Session Initiation Protocol Unitform Resource Identifier (SIP URI), a MAC address or an IP address.

The network response 303 may include a second network response 303b to the second network request 302b, wherein the second network response 303b comprises the tariff information 304.

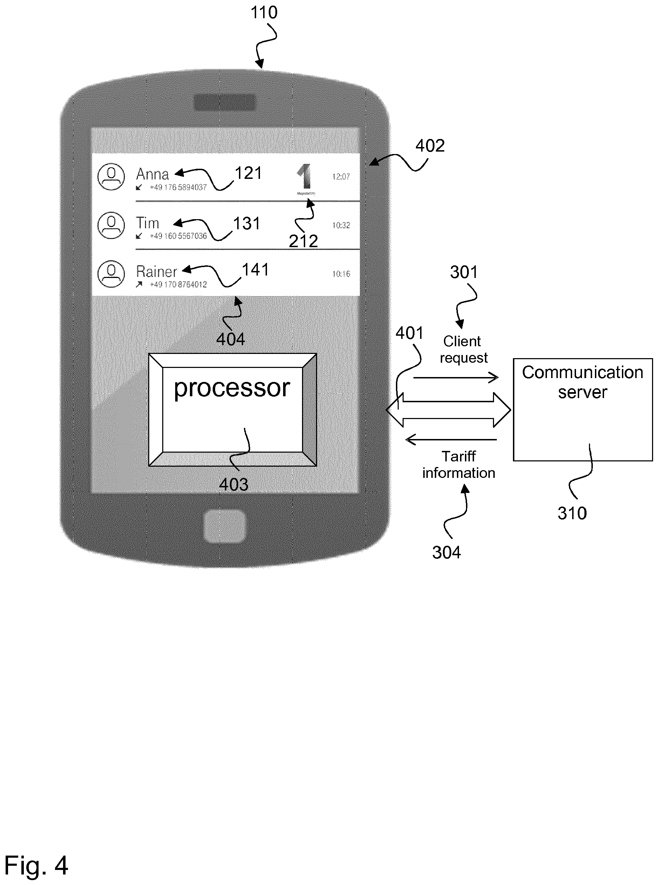

Fig. 4 shows a schematic diagram illustrating a communication device 110 providing real-time tariff information according to an implementation form. The communication device may correspond to the first communication device 110 described above with respect to Figures 1 to 3, i.e. the communication device of the A-Party 111. The communication device 110 provides tariff information 304 for calling at least one second communication device 120, e.g. a second communication device 120 as described above with respect to Figures 1 to 3.

The communication device 110 includes a client interface 401 with a communication server 310, e.g. a communication server 310 described above with respect to Fig. 3. The communication device 110 includes a display 402, configured to display tariff information 304, wherein the tariff information 304 indicates a tariff for the first communication device 110 for calling at least one second communication device 120, e.g. as described above with respect to Figures 2 and 3. The communication device 110 includes a processor 403, configured to transmit a client request 301 for the tariff information 304 via the client interface 401 to the communication server 310, wherein the client request 301 comprises an identity (ID) of the at least one second communication device 120, e.g. as described above with respect to Figure 3. The processor 403 is further configured to receive the tariff information 304 via the client interface 401 from the communication server 310 and display the tariff information 304 on the display 402.

The processor 403 may be configured to display the tariff information 304 on the display 402 before initiating a communication establishment with the at least one second communication device 120.

The communication device 110 may include a memory storing a list 404 of contact persons 121, 131, 141, e.g. as described above with respect to Figures 2 and 3, wherein each contact person from the list is associated with a respective ID of a second communication device 120 of the at least one second communication devices. The processor 403 may be configured to display the tariff information 304 together with a corresponding contact person 121, 131, 141 entry from the list 404.

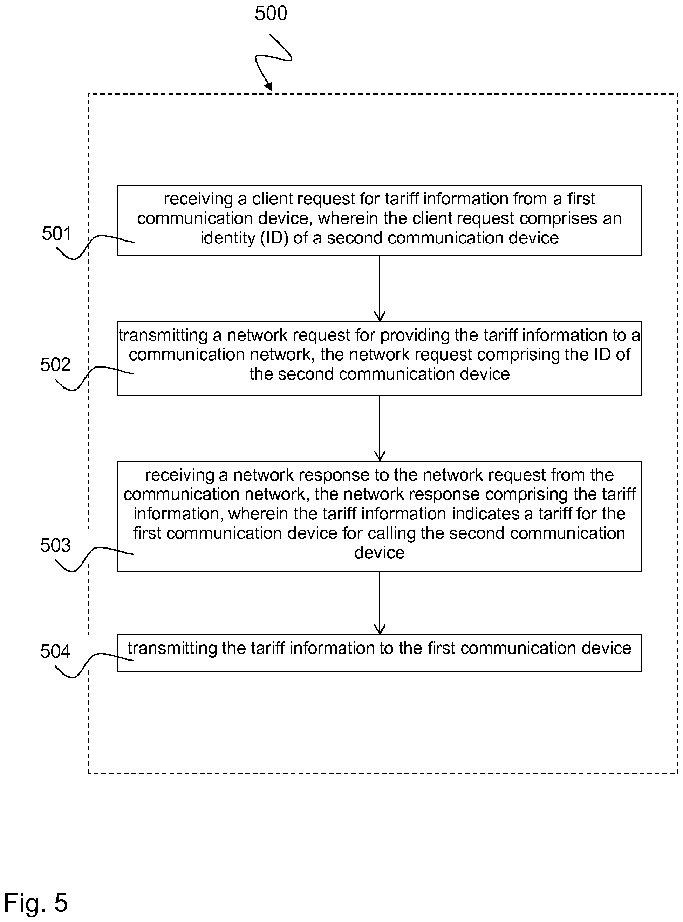

Fig. 5 shows a schematic diagram illustrating a method 500 for providing tariff information of a first communication device for calling a second communication device according to an implementation form.

The method 500 includes receiving 501 a client request 301 for tariff information 304 from a first communication device 110, wherein the client request 301 comprises an identity (ID) of a second communication device 120, e.g. as described above with respect to Figure 3. The method 500 further includes transmitting 502 a network request 302 for providing the tariff information 304 to a communication network 320, the network request 302 comprising the ID of the second communication device 120, e.g. as described above with respect to Figure 3. The method 500 further includes receiving 503 a network response 303 to the network request 302 from the communication network 320, the network response 303 comprising the tariff information 304, wherein the tariff information 304 indicates a tariff for the first communication device 110 for calling the second communication device 120, e.g. as described above with respect to Figure 3. The method 500 further includes transmitting 504 the tariff information 304 to the first communication device 110, e.g. as described above with respect to Figure 3.

The method 500 may be applied in a communication server 310 described above with respect to Fig. 3.

The methods, systems and devices described herein may be implemented as electrical and/or optical circuit within a chip or an integrated circuit or an application specific integrated circuit (ASIC). The invention can be implemented in digital and/or analogue electronic and optical circuitry. The methods, systems and devices described herein may be implemented as software in a Digital Signal Processor (DSP), in a micro-controller or in any other side-processor or as hardware circuit within an application specific integrated circuit (ASIC) of a Digital Signal Processor (DSP).

The present disclosure also supports a computer program product including computer executable code or computer executable instructions that, when executed, causes at least one computer to execute the performing and computing steps described herein, in particular the method 500 as described above with respect to Fig. 5 and the techniques described above with respect to Figs. 2 to 4. Such a computer program product may include a readable non-transitory storage medium storing program code thereon for use by a computer. The program code may perform the method 500 and techniques as described above with respect to Figures 1 to 5.

While a particular feature or aspect of the disclosure may have been disclosed with respect to only one of several implementations, such feature or aspect may be combined with one or more other features or aspects of the other implementations as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A communication server (310) for providing tariff information (304) for a first communication device (110) for calling a second communication device (120), the communication server (310) comprising:
a client interface (311) with a first communication device (110);
a network interface (312) with a communication network (320);
a processor (313), configured to:
receive a client request (301) for tariff information (304) via the client interface (311), wherein the client request (301) comprises an identity, ID, of the second communication device (120),
transmit a network request (302) for providing the tariff information (304) via the network interface (312) to the communication network (320), the network request (302) comprising the ID of the second communication device (120),
receive a network response (303) to the network request (302) via the network interface (312), the network response (303) comprising the tariff information (304), wherein the tariff information (304) indicates a tariff for the first communication device (110) for calling the second communication device (120), and
transmit the tariff information (304) via the client interface (311) to the first communication device (110),
wherein the network request (302) comprises a first network request (302a) directed to a porting database (220) and a second network request (302b) directed to a customer relationship management, CRM, system (210),
wherein the first network request (302a) is configured to request registry information of the second communication device (120); and
wherein the second network request (302b) is configured to request the tariff information (304) for the first communication device (110) based on the registry information of the second communication device (120),
wherein the network response (303) comprises a first network response (303a) to the first network request (302a), the first network response (303a) comprising a service provider ID associated with the ID of the second communication device (120),
wherein the second network request (302b) comprises an ID of the first communication device (110) and the service provider ID associated with the ID of the second communication device (120).

2. The communication server (310) of claim 1,
wherein the processor (313) is configured to transmit the tariff information (304) to the first communication device (110) before a communication establishment is initiated between the first communication device (110) and the second communication device (120).

3. The communication server (310) of claim 1 or 2,
wherein the tariff information (304) indicates if calling the second communication device (120) is a freecall (150) for the first communication device (110) or included in a flatrate of a tariff plan (213) for the first communication device (110).

4. The communication server (310) of one of the preceding claims,
wherein the first network response (303a) further comprises at least one of the following information elements: a service provider type, in particular wireless or wireline, a location routing number, LRN, an SS7 destination point code, a service type, an alternative service provider ID, a billing ID, an end user location and type.

5. The communication server (310) of one of the preceding claims,
wherein the ID of the first communication device (110) is stored in a lookup table of the communication server (310) and/or comprised in the client request (301).

6. The communication server (310) of one of the preceding claims,
wherein the ID of the first communication device (110) and/or the ID of the second communication device (120) are one of the following: a telephone number, an International Mobile Subscriber Identity, IMSI, a mobile subscriber ISDN, MSISDN, number, a Session Initiation Protocol Unitform Resource Identifier, SIP URI, a MAC address or an IP address.

7. The communication server (310) of one of the preceding claims,
wherein the network response (303) comprises a second network response (303b) to the second network request (302b), the second network response (303b) comprising the tariff information (304).

8. A communication system (300), comprising a communication server (310) according to one of the preceding claims and the first communication device (110) providing tariff information (304) for calling the second communication device (120), the first communication device (110) comprising:
a client interface (401) with the communication server (310);
a display (402), configured to display tariff information (304), wherein the tariff information (304) indicates a tariff for the first communication device (110) for calling the second communication device (120); and
a processor (403), configured to:
transmit a client request (301) for the tariff information (304) via the client interface (401) to the communication server (310), wherein the client request (301) comprises an identity, ID, of the second communication device (120),
receive the tariff information (304) via the client interface (401) from the communication server (310), and
display the tariff information (304) on the display (402).

9. The communication system (300) of claim 8,
wherein the processor (403) is configured to display the tariff information (304) on the display (402) before initiating a communication establishment with the second communication device (120).

10. The communication system (300) of claim 8 or 9, the first communication device (110) comprising:
a memory storing a list (404) of contact persons (121, 131, 141), wherein each contact person from the list is associated with a respective ID of the second communication device (120),
wherein the processor (403) is configured to display the tariff information (304) together with a corresponding contact person (121, 131, 141) entry from the list (404).

11. A method (500) for providing tariff information of a first communication device for calling a second communication device, the method (500) comprising:
receiving (501) a client request (301) for tariff information (304) from a first communication device (110), wherein the client request (301) comprises an identity (ID) of a second communication device (120),
transmitting (502) a network request (302) for providing the tariff information (304) to a communication network (320), the network request (302) comprising the ID of the second communication device (120),
receiving (503) a network response (303) to the network request (302) from the communication network (320), the network response (303) comprising the tariff information (304), wherein the tariff information (304) indicates a tariff for the first communication device (110) for calling the second communication device (120), and
transmitting (504) the tariff information (304) to the first communication device (110),
wherein the network request (302) comprises a first network request (302a) directed to a porting database (220) and a second network request (302b) directed to a customer relationship management, CRM, system (210),
wherein the first network request (302a) is configured to request registry information of the second communication device (120); and
wherein the second network request (302b) is configured to request the tariff information (304) for the first communication device (110) based on the registry information of the second communication device (120),
wherein the network response (303) comprises a first network response (303a) to the first network request (302a), the first network response (303a) comprising a service provider ID associated with the ID of the second communication device (120),
wherein the second network request (302b) comprises an ID of the first communication device (110) and the service provider ID associated with the ID of the second communication device (120).

## Patentansprüche

1. Kommunikationsserver (310) zur Bereitstellung von Tarifinformationen (304) für ein erstes Kommunikationsgerät (110) zum Anrufen eines zweiten Kommunikationsgeräts (120), wobei der Kommunikationsserver (310) umfasst:
eine Clientschnittstelle (311) mit einem ersten Kommunikationsgerät (110);
eine Netzwerkschnittstelle (312) mit einem Kommunikationsnetzwerk (320);
einen Prozessor (313), der konfiguriert ist zum:
Empfangen einer Clientanforderung (301) nach Tarifinformationen (304) über die Clientschnittstelle (311), wobei die Clientanforderung (301) eine Identität, ID, des zweiten Kommunikationsgeräts (120) umfasst,
Senden einer Netzwerkanforderung (302) zum Bereitstellen der Tarifinformationen (304) über die Netzwerkschnittstelle (312) an das Kommunikationsnetzwerk (320), wobei die Netzwerkanforderung (302) die ID des zweiten Kommunikationsgeräts (120) umfasst,
Empfangen einer Netzwerkantwort (303) auf die Netzwerkanforderung (302) über die Netzwerkschnittstelle (312), wobei die Netzwerkantwort (303) die Tarifinformationen (304) umfasst, wobei die Tarifinformationen (304) einen Tarif für das erste Kommunikationsgerät (110) zum Anrufen des zweiten Kommunikationsgeräts (120) angeben, und
Senden der Tarifinformationen (304) über die Clientschnittstelle (311) an das erste Kommunikationsgerät (110),
wobei die Netzwerkanforderung (302) eine erste Netzwerkanforderung (302a), die an eine Portierungsdatenbank (220) gerichtet ist, und eine zweite Netzwerkanforderung (302b), die an ein Customer-Relationship-Management-, CRM, System (210) gerichtet ist, umfasst,
wobei die erste Netzwerkanforderung (302a) konfiguriert ist, Registrierungsinformationen des zweiten Kommunikationsgeräts (120) anzufordern; und
wobei die zweite Netzwerkanforderung (302b) konfiguriert ist, die Tarifinformationen (304) für das erste Kommunikationsgerät (110) basierend auf den Registrierungsinformationen des zweiten Kommunikationsgeräts (120) anzufordern,
wobei die Netzwerkantwort (303) eine erste Netzwerkantwort (303a) auf die erste Netzwerkanforderung (302a) umfasst, wobei die erste Netzwerkantwort (303a) eine Dienstanbieter-ID, die der ID des zweiten Kommunikationsgeräts (120) zugeordnet ist, umfasst,
wobei die zweite Netzwerkanforderung (302b) eine ID des ersten Kommunikationsgeräts (110) und die Dienstanbieter-ID, die der ID des zweiten Kommunikationsgeräts (120) zugeordnet ist, umfasst.

2. Kommunikationsserver (310) nach Anspruch 1,
wobei der Prozessor (313) konfiguriert ist, die Tarifinformationen (304) an das erste Kommunikationsgerät (110) zu senden, bevor ein Kommunikationsaufbau zwischen dem ersten Kommunikationsgerät (110) und dem zweiten Kommunikationsgerät (120) initiiert ist.

3. Kommunikationsserver (310) nach Anspruch 1 oder 2,
wobei die Tarifinformationen (304) angeben, ob der Anruf an das zweite Kommunikationsgerät (120) ein Gratisanruf (150) für das erste Kommunikationsgerät (110) ist oder in einer Flatrate eines Tarifplans (213) für das erste Kommunikationsgerät (110) enthalten ist.

4. Kommunikationsserver (310) nach einem der vorhergehenden Ansprüche,
wobei die erste Netzwerkantwort (303a) ferner mindestens eines der folgenden Informationselemente umfasst: einen Dienstanbietertyp, insbesondere drahtlos oder drahtgebunden, eine Standortroutingnummer, LRN, einen SS7-Zielpunktcode, einen Diensttyp, eine ID für einen alternativen Dienstanbieter, eine Rechnungs-ID, Endbenutzerstandort und -typ.

5. Kommunikationsserver (310) nach einem der vorhergehenden Ansprüche,
wobei die ID des ersten Kommunikationsgeräts (110) in einer Nachschlagetabelle des Kommunikationsservers (310) gespeichert und/oder in der Clientanforderung (301) enthalten ist.

6. Kommunikationsserver (310) nach einem der vorhergehenden Ansprüche,
wobei die ID des ersten Kommunikationsgeräts (110) und/oder die ID des zweiten Kommunikationsgeräts (120) eines der folgenden sind: eine Telefonnummer, eine internationale Mobilfunkteilnehmeridentität, IMSI, eine Mobilfunkteilnehmer-ISDN-, MSISDN, Nummer, einen Sitzungs-Initiierungs-Protokoll-Uniform-Ressource-Identifier, SIP-URI, eine MAC-Adresse oder eine IP-Adresse.

7. Kommunikationsserver (310) nach einem der vorhergehenden Ansprüche,
wobei die Netzwerkantwort (303) eine zweite Netzwerkantwort (303b) auf die zweite Netzwerkanforderung (302b) umfasst, wobei die zweite Netzwerkantwort (303b) die Tarifinformationen (304) umfasst.

8. Kommunikationssystem (300), umfassend einen Kommunikationsserver (310) nach einem der vorhergehenden Ansprüche und das erste Kommunikationsgerät (110), das die Tarifinformationen (304) zum Anrufen des zweiten Kommunikationsgeräts (120) bereitstellt, wobei das erste Kommunikationsgerät (110) umfasst:
eine Clientschnittstelle (401) mit dem Kommunikationsserver (310);
eine Anzeige (402), die konfiguriert ist, Tarifinformationen (304) anzuzeigen, wobei die Tarifinformationen (304) einen Tarif für das erste Kommunikationsgerät (110) zum Anrufen des zweiten Kommunikationsgeräts (120) angeben; und
einen Prozessor (403), der konfiguriert ist zum:
Senden einer Clientanforderung (301) nach den Tarifinformationen (304) über die Clientschnittstelle (401) an den Kommunikationsserver (310), wobei die Clientanforderung (301) eine Identität, ID, des zweiten Kommunikationsgeräts (120) umfasst,
Empfangen der Tarifinformationen (304) über die Clientschnittstelle (401) von dem Kommunikationsserver (310), und
Anzeigen der Tarifinformationen (304) auf der Anzeige (402).

9. Kommunikationssystem (300) nach Anspruch 8,
wobei der Prozessor (403) konfiguriert ist, die Tarifinformationen (304) auf der Anzeige (402) anzuzeigen, bevor ein Kommunikationsaufbau mit dem zweiten Kommunikationsgerät (120) initiiert ist.

10. Kommunikationssystem (300) nach Anspruch 8 oder 9, wobei das erste Kommunikationsgerät (110) umfasst:
einen Speicher, der eine Liste (404) von Kontaktpersonen (121, 131, 141) speichert, wobei jede Kontaktperson aus der Liste einer jeweiligen ID des zweiten Kommunikationsgeräts (120) zugeordnet ist,
wobei der Prozessor (403) konfiguriert ist, die Tarifinformationen (304) zusammen mit einem entsprechenden Eintrag einer Kontaktperson (121, 131, 141) aus der Liste (404) anzuzeigen.

11. Verfahren (500) zur Bereitstellung von Tarifinformationen eines ersten Kommunikationsgeräts zum Anrufen eines zweiten Kommunikationsgeräts, wobei das Verfahren (500) umfasst:
Empfangen (501) einer Clientanforderung (301) nach Tarifinformationen (304) von einem ersten Kommunikationsgerät (110), wobei die Clientanforderung (301) eine Identität (ID) eines zweiten Kommunikationsgeräts (120) umfasst,
Senden (502) einer Netzwerkanforderung (302) zum Bereitstellen der Tarifinformationen (304) an ein Kommunikationsnetzwerk (320), wobei die Netzwerkanforderung (302) die ID des zweiten Kommunikationsgeräts (120) umfasst,
Empfangen (503) einer Netzwerkantwort (303) auf die Netzwerkanforderung (302) von dem Kommunikationsnetzwerk (320), wobei die Netzwerkantwort (303) die Tarifinformationen (304) umfasst, wobei die Tarifinformationen (304) einen Tarif für das erste Kommunikationsgerät (110) zum Anrufen des zweiten Kommunikationsgeräts (120) angeben, und
Senden (504) der Tarifinformationen (304) an das erste Kommunikationsgerät (110),
wobei die Netzwerkanforderung (302) eine erste Netzwerkanforderung (302a), die an eine Portierungsdatenbank (220) gerichtet ist, und eine zweite Netzwerkanforderung (302b), die an ein Customer-Relationship-Management-, CRM, System (210) gerichtet ist, umfasst,
wobei die erste Netzwerkanforderung (302a) konfiguriert ist, Registrierungsinformationen des zweiten Kommunikationsgeräts (120) anzufordern; und
wobei die zweite Netzwerkanforderung (302b) konfiguriert ist, die Tarifinformationen (304) für das erste Kommunikationsgerät (110) basierend auf den Registrierungsinformationen des zweiten Kommunikationsgeräts (120) anzufordern,
wobei die Netzwerkantwort (303) eine erste Netzwerkantwort (303a) auf die erste Netzwerkanforderung (302a) umfasst, wobei die erste Netzwerkantwort (303a) eine Dienstanbieter-ID, die der ID des zweiten Kommunikationsgeräts (120) zugeordnet ist, umfasst,
wobei die zweite Netzwerkanforderung (302b) eine ID des ersten Kommunikationsgeräts (110) und die Dienstanbieter-ID, die der ID des zweiten Kommunikationsgeräts (120) zugeordnet ist, umfasst.

## Revendications

1. Serveur de communication (310) pour fournir des informations tarifaires (304) pour un premier dispositif de communication (110) pour appeler un deuxième dispositif de communication (120), le serveur de communication (310) comprenant :
une interface client (311) avec un premier dispositif de communication (110) ;
une interface réseau (312) avec un réseau de communication (320) ;
un processeur (313) configuré pour :
recevoir une requête de client (301) pour des informations tarifaires (304) via l'interface client (311), la requête de client (301) comprenant une identité, ID, du deuxième dispositif de communication (120),
transmettre une requête de réseau (302) pour fournir les informations tarifaires (304) via l'interface réseau (312) au réseau de communication (320), la requête de réseau (302) comprenant l'ID du deuxième dispositif de communication (120),
recevoir une réponse de réseau (303) à la requête de réseau (302) via l'interface réseau (312), la réponse de réseau (303) comprenant les informations tarifaires (304), les informations tarifaires (304) indiquant un tarif pour le premier dispositif de communication (110) pour appeler le deuxième dispositif de communication (120), et
transmettre les informations tarifaires (304) via l'interface client (311) au premier dispositif de communication (110),
dans lequel la requête de réseau (302) comprend une première requête de réseau (302a) dirigée vers une base de données de portage (220) et une deuxième requête de réseau (302b) dirigée vers un système de gestion de relations clients, CRM (210),
dans lequel la première requête de réseau (302a) est configurée pour demander des informations de registre du deuxième dispositif de communication (120) ; et
dans lequel la deuxième requête de réseau (302b) est configurée pour demander les informations tarifaires (304) pour le premier dispositif de communication (110) sur la base des informations de registre du deuxième dispositif de communication (120),
dans lequel la réponse de réseau (303) comprend une première réponse de réseau (303a) à la première requête de réseau (302a), la première réponse de réseau (303a) comprenant une ID de fournisseur de services associée à l'ID du deuxième dispositif de communication (120),
dans lequel la deuxième requête de réseau (302b) comprend une ID du premier dispositif de communication (110) et l'ID de fournisseur de services associée à l'ID du deuxième dispositif de communication (120).

2. Serveur de communication (310) de la revendication 1,
dans lequel le processeur (313) est configuré pour transmettre les informations tarifaires (304) au premier dispositif de communication (110) avant qu'un établissement de communication ne soit lancé entre le premier dispositif de communication (110) et le deuxième dispositif de communication (120).

3. Serveur de communication (310) de la revendication 1 ou 2,
dans lequel les informations tarifaires (304) indiquent si le fait d'appeler le deuxième dispositif de communication (120) est un appel gratuit (150) pour le premier dispositif de communication (110) ou est inclus dans un coût-forfait d'un plan tarifaire (213) pour le premier dispositif de communication (110).

4. Serveur de communication (310) de l'une des revendications précédentes,
dans lequel la première réponse de réseau (303a) comprend en outre au moins un des éléments d'information suivants : un type de fournisseur de services, en particulier sans fil ou filaire, un numéro de routage de localisation, LRN, un code de point de destination SS7, un type de service, une ID de fournisseur de services en variante, une ID de facturation, un type et une localisation d'utilisateur final.

5. Serveur de communication (310) de l'une des revendications précédentes,
dans lequel l'ID du premier dispositif de communication (110) est stockée dans une table de consultation du serveur de communication (310) et/ou est comprise dans la requête de client (301).

6. Serveur de communication (310) de l'une des revendications précédentes,
dans lequel l'ID du premier dispositif de communication (110) et/ou l'ID du deuxième dispositif de communication (120) sont un élément parmi les suivants : un numéro de téléphone, une identité internationale de l'abonné mobile, IMSI, un numéro d'abonné mobile, ISDN, MSISDN, un identifiant de ressource uniforme à protocole d'initialisation de session, SIP URI, une adresse MAC ou une adresse IP.

7. Serveur de communication (310) de l'une des revendications précédentes,
dans lequel la réponse de réseau (303) comprend une deuxième réponse de réseau (303b) à la deuxième requête de réseau (302b), la deuxième réponse de réseau (303b) comprenant les informations tarifaires (304).

8. Système de communication (300), comprenant un serveur de communication (310) selon l'une quelconque des revendications précédentes et le premier dispositif de communication (110) fournissant des informations tarifaires (304) pour appeler le deuxième dispositif de communication (120), le premier dispositif de communication (110) comprenant :
une interface client (401) avec le serveur de communication (310) ;
un afficheur (402), configuré pour afficher des informations tarifaires (304), les informations tarifaires (304) indiquant un tarif pour le premier dispositif de communication (110) pour appeler le deuxième dispositif de communication (120) ; et
un processeur (403), configuré pour :
transmettre une requête de client (301) pour les informations tarifaires (304) via l'interface client (401) vers le serveur de communication (310), la requête de client (301) comprenant une identité, ID, du deuxième dispositif de communication (120),
recevoir les informations tarifaires (304) via l'interface client (401) en provenance du serveur de communication (310), et
afficher les informations tarifaires (304) sur l'afficheur (402).

9. Système de communication (300) de la revendication 8,
dans lequel le processeur (403) est configuré pour afficher les informations tarifaires (304) sur l'afficheur (402) avant de lancer un établissement de communication avec le deuxième dispositif de communication (120).

10. Système de communication (300) de la revendication 8 ou 9, le premier dispositif de communication (110) comprenant :
une mémoire stockant une liste (404) de personnes à contacter (121, 131, 141), chaque personne à contacter de la liste étant associée à une ID respective du deuxième dispositif de communication (120),
dans lequel le processeur (403) est configuré pour afficher les informations tarifaires (304) en conjonction avec une entrée de personne à contacter correspondante (121, 131, 141) de la liste (404).

11. Procédé (500) pour fournir des informations tarifaires d'un premier dispositif de communication pour appeler un deuxième dispositif de communication, le procédé (500) comprenant :
la réception (501) d'une requête de client (301) pour des informations tarifaires (304) en provenance d'un premier dispositif de communication (110), la requête de client (301) comprenant une identité (ID) d'un deuxième dispositif de communication (120),
la transmission (502) d'une requête de réseau (302) pour fournir les informations tarifaires (304) à un réseau de communication (320), la requête de réseau (302) comprenant l'ID du deuxième dispositif de communication (120),
la réception (503) d'une réponse de réseau (303) à la requête de réseau (302) en provenance du réseau de communication (320), la réponse de réseau (303) comprenant les informations tarifaires (304), les informations tarifaires (304) indiquant un tarif pour le premier dispositif de communication (110) pour appeler le deuxième dispositif de communication (120), et
la transmission (504) des informations tarifaires (304) au premier dispositif de communication (110),
dans lequel la requête de réseau (302) comprend une première requête de réseau (302a) dirigée vers une base de données de portage (220) et une deuxième requête de réseau (302b) dirigée vers un système de gestion de relations clients, CRM (210),
dans lequel la première requête de réseau (302a) est configurée pour demander des informations de registre du deuxième dispositif de communication (120) ; et
dans lequel la deuxième requête de réseau (302b) est configurée pour demander les informations tarifaires (304) pour le premier dispositif de communication (110) sur la base des informations de registre du deuxième dispositif de communication (120),
dans lequel la réponse de réseau (303) comprend une première réponse de réseau (303a) à la première requête de réseau (302a), la première réponse de réseau (303a) comprenant une ID de fournisseur de services associée à l'ID du deuxième dispositif de communication (120),
dans lequel la deuxième requête de réseau (302b) comprend une ID du premier dispositif de communication (110) et l'ID de fournisseur de services associée à l'ID du deuxième dispositif de communication (120).
